# EUROPEAN PATENT APPLICATION

(11) **EP 4 659 571 A1**
(43) Date of publication of application: **10.12.2025**
(21) Application number: 25181112.1
(22) Date of filing: 05.06.2025
(51) Int. Cl.: A01J 7/02

(54) **MILKING SYSTEM PROVIDED WITH CENTRAL MILK CONDUITS, MILKING PARLOUR PROVIDED THEREWITH AND METHOD THEREFOR**

(30) Priority: 06.06.2024 NL 2037880
(71) Applicant: BouMatic Technology B.V., 8304 AX Emmeloord (NL)
(72) Inventor: VAN DER SLUIS, Peter Willem, 8304 AX Emmeloord (NL); AGRICOLA, Sido, 8304 AX Emmeloord (NL)
(74) Representative: Arnold & Siedsma

(57) **Abstract**

The present invention relates to a milking system provided with central milk conduits, milking parlour provided therewith and method therefor. The milking system according to the invention comprises:
- two or more milking devices;
- a first central milk conduit connected operatively to the two or more milking devices;
- a second central milk conduit connected operatively to the two or more milking devices;
- a central liquid supply conduit;
- at least one milk tank connected to the first and second central milk conduit;
- a milk flow controller configured to switch between the first and the second central milk conduit as an active milk conduit for discharging milk to the at least one milk tank, wherein the other of the first and second central milk conduit is designated as an inactive milk conduit; and
- a flushing controller configured to control the flushing of one of the first and/or second central milk conduit which is designated as inactive milk conduit.

## Description

The present invention relates to a milking system and corresponding method for milking milk-producing animals, such as dairy cows.

Known in practice are diverse milking systems. These conventional milking systems usually comprise a number of milking devices which are connected to a milk tank. The number of milking devices depends particularly on the number of animals for milking.

Such a milking system requires diverse components, such as valves, pumps, filters and so on. This goes hand-in-hand with (investment) costs for such components. When (parts of) the milking system are being cleaned by means of a flushing process being performed, the relevant milking devices of the milking system are temporarily out of operation. This reduces the overall capacity of the milking system in practice.

Furthermore, it is usually difficult to add one or more milking devices when a business is expanded with a number of animals for milking. This will require diverse drastic modifications to the milking system.

The present invention has for its object to obviate or at least reduce the above stated problems. It can be a particular object of the invention to provide a milking system which can be realized in cost-effective manner and/or has a greater, preferably maximum, uptime.

This object is achieved with a milking system according to the invention for milking animals, wherein the milking system comprises:
- two or more milking devices;
- a first central milk conduit connected operatively to the two or more milking devices;
- a second central milk conduit connected operatively to the two or more milking devices;
- a central liquid supply conduit;
- at least one milk tank connected to the first and second central milk conduit;
- a milk flow controller configured to switch between the first and the second central milk conduit as an active milk conduit for discharging milk to the at least one milk tank, wherein the other of the first and second central milk conduit is designated as an inactive milk conduit; and
- a flushing controller configured to control the flushing of one of the first and/or second central milk conduit which is designated as inactive milk conduit.

Providing the milking system with two or more milking devices, for instance four or more milking devices, and preferably six or more milking devices enables the milking system to be utilized in companies with for instance more than 240 dairy cows. It will be apparent that the number of milking devices depends on the number of animals for milking.

The milking system according to the invention comprises a first central milk conduit and a second central milk conduit. All milking devices are preferably connected to both the first central milk conduit and the second central milk conduit. These central milk conduits are each configured individually to transport the milk obtained with the milking devices to the at least one milk tank.

Making use of a milk flow controller in the milking system according to the invention makes it possible to switch between use of the first or the second central milk conduit as a milk conduit active at that moment for discharge and transport of the milk to the at least one milk tank. The other, unused central milk conduit is inactive for transport of milk at that moment. This for instance makes it possible to flush this other central milk conduit while the milking system remains operative and can transport supplied milk to the at least one milk tank via the other central milk conduit.

By making use of (at least two) central milk conduits it is additionally no longer necessary to provide each individual milking device with its own milk conduit for transport of milk to the milk tank. This reduces the number of parts, such as valves, filters and pumps, significantly. Besides the option of realizing a cost-effective milking system thereby, it is thereby also possible to limit maintenance work and maintenance costs. Additionally, the risk of malfunctions of such parts, resulting in potential downtime of the installation, is reduced further.

A further additional advantage of the milking system according to the invention is that such a milking system is relatively suitable for transport between milking device and milk tank over relatively long distances, for instance 150 metres or even more. This is a relevant advantage particularly in large companies.

The two central milk conduits are preferably arranged at an incline, such that the milk is transported from the milking device to the milk tank. The quality of the milk can hereby be better preserved. In a preferred embodiment according to the invention an additional pump is provided in the central milk conduit.

Owing to the use of a first central milk conduit and a second central milk conduit, the milking system according to the invention can be cleaned effectively using a flushing controller. This flushing controller is configured to control the flushing process. The first and/or second central milk conduit designated as inactive milk conduit is flushed here, while at that moment the other central milk conduit is usable for transport of milk between one or more milking devices of the milking system to the at least one milk tank. The milking system according to the invention can hereby be utilized for longer periods of time (uptime), so that the overall capacity of the milking system according to the invention is as optimal as possible. It is thus for instance possible with the milking system to milk more animals with a fixed number of milking devices and/or to suffice with fewer milking devices for the same number of animals for milking. It will be apparent that this has an immediate cost advantage. Additionally, animals for milking need not wait unnecessarily for a flushing of a central milk conduit. This has a positive effect on animal welfare.

The flushing controller and milk flow controller in the milking system according to the invention can take the form of separate controllers and/or can also be integrated into a combined control system and/or can be integrated into an overall control system for the whole milking process or the whole company.

A further advantage of the milking system according to the invention is that use of the first and second central milk conduits makes it relatively simple to connect further milking devices to the milking system at a later stage. A modular milking system, wherein milking devices can be added to the milking system as modules in order to expand it therewith, is hereby obtained. This provides thereby a scalable milking system.

The milking system according to the invention further comprises a central liquid supply conduit. This central liquid supply conduit can for instance be used to supply flushing liquid or flushing water for flushing the first and/or second central milk conduit. The individual milking devices are preferably also connected to this central liquid supply conduit. This makes it possible to clean an individual milking device by means of flushing using the liquid supplied with the central liquid supply conduit. This enables individual cleaning of a separate milking device of the milking system according to the invention, while the remaining milking devices can remain operative and can transport milk via the first or second central milk conduit. This increases the modular character of the milking system according to the invention in that cleaning can also be performed effectively in modular manner.

The central liquid supply conduit is preferably connected to a central liquid tank configured to flush at least the first and second central milk conduit. This central liquid tank is preferably also configured to flush the individual milking devices. Use of this central liquid tank increases the modular character of the milking system according to the invention still further.

In a presently preferred embodiment, the (central) liquid supply conduit is designed such that the entire milk conduit between milking device and milk tank can be flushed, including any elements such as valves and buffers. This renders the flushing process even more effective. Preferably, part or all of the flushing liquid can be circulated during the flushing process. This enables effective use of the liquid. For example, it is also possible for the liquid to be circulated in a first part of the flushing process and for the liquid to be used for a single flowthrough (single use) in a second part of the flushing process. Preferably, the flushing controller is configured to enable switching between the flushing circulation mode and the flowthrough flushing mode. This ensures effective cleaning.

In an advantageous embodiment according to the invention the milking system comprises a first milk buffer connected operatively to the first milk conduit and a second milk buffer connected operatively to the second milk conduit.

Providing the first and second central milk conduit with a separate milk buffer enables a controlled milk flow to the milk tank to be provided. This can for instance be utilized when emptying and/or cleaning the (at least one) milk tank.

In a presently preferred embodiment, the first and second central milk conduits extend between the two or more milking devices and the milk tank. In embodiments in which each central milk line is provided with a separate milk buffer, the central milk conduit preferably also extends between the two or more milking devices and the milk tank, i.e. with a separate milk buffer arranged in a central milk conduit. Because the central milk conduit extends between the two or more milking devices and the milk tank, a central milk conduit can be cleaned over the entire path while milk production can continue via the other of the central milk conduits. In the case of one or more separate milk buffers, these buffers, as well as the conduits between the buffer(s) and the milk tank, are also cleaned. This, therefore, prevents conduit sections and/or milk buffers that cannot be cleaned during milk production.

In an advantageous embodiment according to the invention each of the two or more milking devices is provided with a pump for milk transport to the first and second central milk conduit.

Providing the milking devices individually with a relatively small liquid pump enables the obtained milk to be transported in relatively simple manner from the relevant milking device to the first and/or second central milk conduit. In a currently preferred embodiment the obtained milk is transported from there to the milk tank via an incline in order to preserve the quality of the obtained milk as far as possible.

In a further advantageous embodiment according to the invention the milking system comprises a second milk tank connected operatively to the first and/or second central milk conduit.

Providing a second milk tank connected operatively to the first and/or second central milk conduit further increases the flexibility of the milking system according to the invention. This for instance makes it simpler to empty and/or to clean one of the two or more milk tanks while the milk being obtained at that moment can be collected in the other tank.

In a further advantageous embodiment according to the invention at least a part of the milking devices of the milking system comprises a milking robot.

Utilizing one or more milking robots adds the functionality of a milking robot to the milking system in an embodiment according to the invention. It is hereby possible to provide the milking system only with milking robots rather than only conventional milking devices, as well as a combination of different types of milking device.

In a further advantageous embodiment according to the invention the milking system comprises a central discharge conduit.

Providing a central discharge conduit enables discharge of liquids to take place centrally. This for instance has the advantage that the liquids to be discharged can be discharged more effectively and can be reused for other purposes in effective manner. This relates for instance to the flushing water of the central milk conduits and/or the separate milking devices.

In a further advantageous embodiment according to the invention the milking system comprises a central separation conduit.

Such a central separation conduit can for instance be used for separate discharge of milk obtained from for instance insulin cows. Owing to the separate discharge, this milk, or other relevant milk, is not mixed with the remaining obtained milk. Owing to the central separation conduit, this milk can be processed separately, while the modular character of the milking system is preserved.

The invention further relates to a milking parlour provided with a milking system according to any one of the above described embodiments.

The milking parlour provides similar advantages and effects as described for the milking system.

The invention further also relates to a method for milking an animal, wherein the method comprises the steps of:
- providing a milking system in one of the above described embodiments;
- switching with the milk flow controller between the first and the second central milk conduit as an active milk conduit for discharge of milk to the at least one milk tank, wherein the other of the first and second central milk conduit is designated as an inactive milk conduit; and
- controlling with the flushing controller the flushing of one of the first and/or second central milk conduit which is designated as inactive milk conduit.

The method provides similar advantages and effects as described for the milking system and/or the milking parlour.

In an advantageous embodiment according to the invention the method further comprises the step of flushing the inactive (central) milk conduit, wherein during the flushing process the active (central) milk conduit can be in use for discharging milk obtained at the milking devices to the at least one milk tank.

Using the first and second central milk conduit enables one of these conduit to be flushed while the other can remain fully operative. This results in longer uptimes for the milking system.

In a further advantageous embodiment according to the invention the method further comprises the step of flushing one of the milking devices while the active milk conduit is in use for discharging milk from the remaining milking devices to the at least one milk tank.

Flushing individual milking devices of the milking system separately and keeping the remaining milking devices in use optimizes the uptime of the milking system further. It is thereby possible, among other things, to milk more animals with the milking system and/or to milk the same number of animals with a smaller number of milking devices.

In a further advantageous embodiment according to the invention, the entire inactive central milk conduit is flushed between the two or more milking devices and the milk tank, including any separate buffers that may be present. This, therefore, prevents sections of the conduit and/or milk buffers that cannot be cleaned during milk production.

In a further advantageous embodiment according to the invention, flushing liquid is circulated over the liquid supply conduit and the milk conduit. This enables using the flushing liquid effectively. If desired, it is also possible to first circulate the flushing liquid for a time period during the flushing process and then flush the milk conduit with 'fresh' flushing liquid for a time period. For this purpose, the flushing process is switched from a circulation mode to a flushing-through mode. Such an approach increases the effectiveness of the flushing water used and at the same time maintains the cleaning quality of the flushing process.

It will be apparent that it is also possible with the milking system according to the invention to perform both the flushing of the inactive central milk conduit and the flushing of separate milking devices, while the milking system remains operative. This combined effect increases the utility of the milking system according to the invention still further.

It will be apparent that the milking system is applicable for all types of milking device, including milking robots. If desired, a combination of diverse types of milking device can also be applied.

Further features, advantages and details of the invention are described on the basis of preferred embodiments thereof, wherein reference is made to the accompanying drawings, in which:
- Figure 1 shows an overview of a first embodiment of a milking system according to the invention;
- Figure 2 shows an overview of a second embodiment of a milking system according to the invention;
- Figure 3 shows a schematic representation of a flushing process of a central milk conduit in a milking system according to the invention; and
- Figure 4 shows a schematic representation of a flushing process of a separate milking device in a milking system according to the invention.

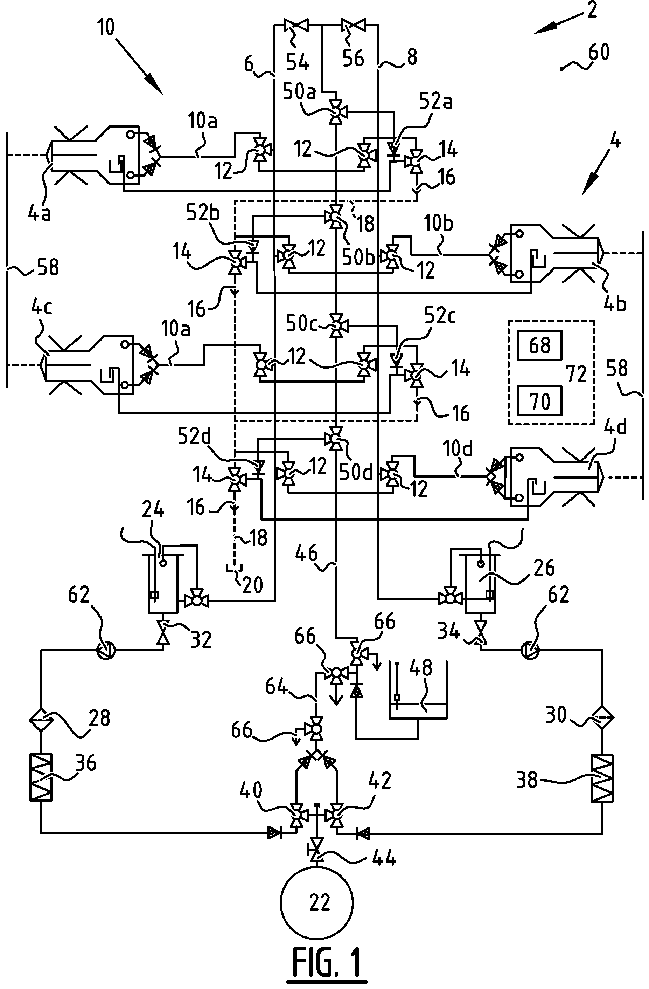

Milking system 2 (figure 1) comprises a number of milking devices 4, 4a,b,c,d. Milking system 2 is further provided with first central milk conduit 6 and second central milk conduit 8. Milking devices 4 are each connected individually via milk conduits 10, 10a,b,c,d to milk conduits 6, 8 by means of a number of valves 12.

In the shown embodiment conduits 10 are further connected via valves 14 to respective discharges 16. If desired, it is possible to connect separate discharges 16 via schematically shown central discharge conduit 18 and central discharge 20.

Central milk conduits 6, 8 discharge milk supplied via milking devices 4 to milk tank 22 via first buffer vessel 24 and respectively second buffer vessel 26 via schematically shown filters 28, 30 and a number of valves 32, 34, 40, 42. In the shown embodiment non-return valve 44 for milk tank 22 is further provided. Heat exchangers 36, 38 are optionally provided.

For cleaning/flushing of milking system 2 a central liquid supply conduit 46 which is provided with the relevant liquid from buffer 48 is provided in the shown embodiment. The relevant liquid is here supplied via valves 50a,b,c,d to respective milking devices 4 via respective non-return valves 52a,b,c,d. The flushing liquid can then be carried via conduits 10 to discharge 16, and optionally further via central discharge conduit 18 to central discharge 20.

Via valves 54, 56 the flushing liquid can also be carried from central liquid supply conduit 46 to the respective central milk conduit 6, 8 for cleaning/flushing thereof. Discharge thereof can take place at (a) desired location(s) (not shown). In the shown embodiment supply of flushing liquid takes place via liquid supply conduit(s) 64 provided with valves 66. Milk conduits 6, 8 are optionally operatively connected to central liquid supply conduit 46 via conduit 64 and valves 66. Valves 66 are preferably provided here such that flushing liquid can circulate around the circuit in question. It will otherwise be apparent that diverse configurations of milking systems 2 according to the invention are possible.

Separated milk can optionally be discharged via schematically shown separation conduit 58. It will be apparent that this can take diverse forms.

Milking devices 4 can further comprise diverse types of milking device, also including milking robots. Milking system 2 is preferably placed in milking parlour 60.

In the shown embodiment milk pump 62 is provided downstream of valve 34. It will be apparent that, if necessary and/or desired, such a milk pump can also be applied for other milking devices 4a,b,c,d.

In the shown embodiment of milking system 2 milk flow controller 68 controls inter alia valves 12 and determines thereby which of the central milk conduits 6, 8 will be used for transport of the milk obtained at milking device 4 to milk tank 22. Milk flow controller 68 thereby determines which of the central milk conduits 6, 8 is in use as active conduit at any moment, and which conduit can be designated as inactive in that moment and is for instance available for cleaning/flushings. In this embodiment such a cleaning/flushing process is controlled via flushing controller 70, which can control inter alia valves 56 and 54. It is hereby possible to actively use one central milk conduit 6, 8 for transport of milk and to flush the other central milk conduit 6, 8 simultaneously. Milk flow controller 68 and flushing controller 70 can be provided as separate controllers (shown schematically in figure 1) and can also be integrated into a single controller 72 which can possibly also be used to control other (operating) processes (likewise shown schematically in figure 1). Flushing controller 70 can also be used for flushing/cleaning the individual milking devices 4 by controlling valves 50a,b,c,d and 52a,b,c,d. The flushing liquid can be discharged by then controlling valves 12, 14 accordingly in the shown embodiment.

It will be apparent that shown milking system 2 can have further components such as pumps, valves, filters, sensors and the like, which are not shown specifically as such in the shown embodiment (figure 1) for the sake of legibility.

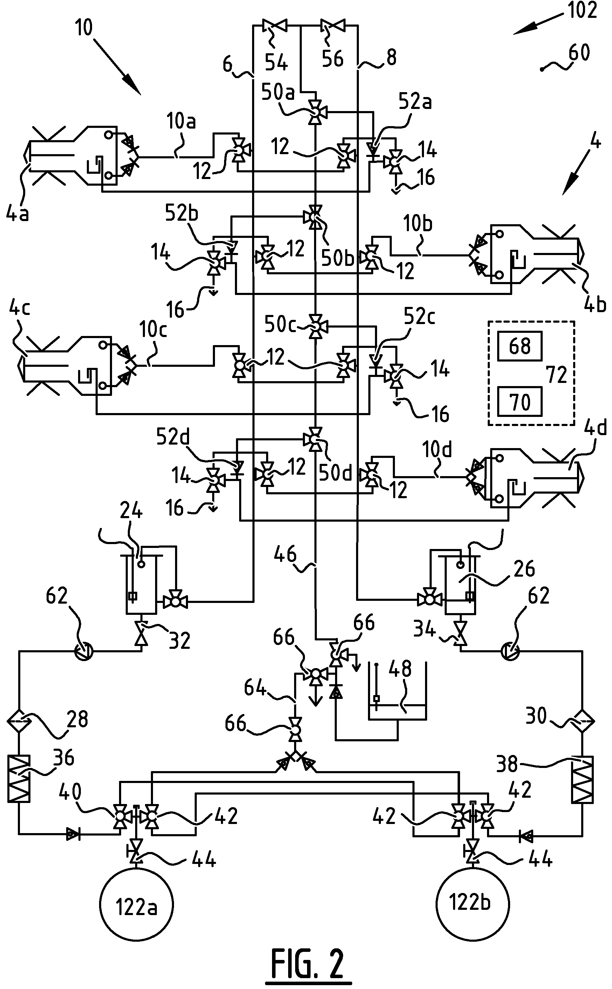

In an alternative embodiment milking system 102 (figure 2) is likewise provided with two central milk conduits 6, 8 and a number of milking devices 4. Milking system 102 is additionally provided in this shown embodiment with first milk tank 122a and second milk tank 122b. Other components of milking system 102 are the same or similar components as described for milking system 2, including for instance valves 12, 14, 52, 54, 56 and so on. If desired, it is also possible to provide central discharge conduit 18 and separation conduit 58.

During use, milking systems 2, 102 are switched at various moments using controllers 68, 70, 72. Any further processes thereof will be further described below.

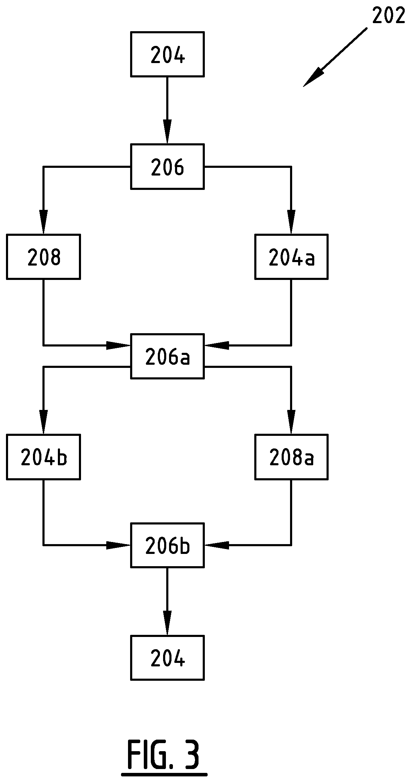

Flushing process 202 (figure 3) for flushing central milk conduits 6, 8 starts from an operating situation in which milking process 204 is active. After switching process 206 first central milk conduit 6 is flushed in flushing process 208, while second central milk conduit 8 can be used to continue milking process 204a. After flushing process 208, switching process 206a is performed and, if desired, second central milk conduit 8 can be flushed via flushing process 208a while central milk conduit 6 is in use for milking process 204b at that moment. After this flushing process 208a the starting position for milking process 204 is returned to via switching process 206b. It will be apparent that it is also possible with flushing process 202 to flush only one of central milk conduits 6, 8 and/or to flush further central milk conduits.

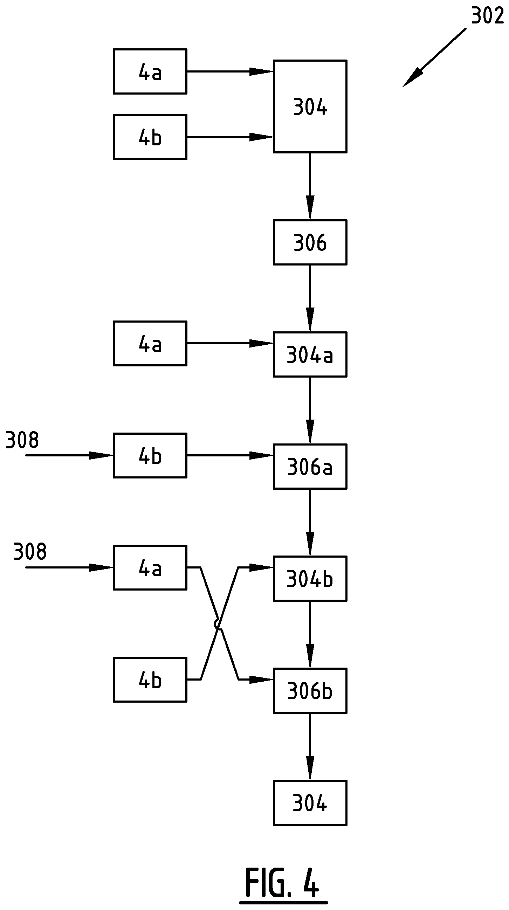

Use is for instance made of flushing process 302 (figure 4) to flush separate milking devices 4, 4a,b,c,d. In the shown embodiment it is made possible in the starting situation of milking process 304 to supply milk from milking devices 4a,b. This can be discharged via central milk conduits 6, 8 to milk tank 22, 122a, 122b in the relevant milking systems. If it is for instance desired to flush milking device 4b, flushing controller 70 is activated via switching process 306, such that milking device 4a can continue milking via milking process 304a and milking device 4b can be flushed via flushing 308. After flushing process 308, another state is switched to via switching process 306a, for instance the state in which milking device 4a is flushed in flushing process 308a and milking device 4b supplies milk via milking process 304b. After flushing process 308a it is possible to return to the regular milking process 304 via switching process 306b. It will be apparent that it is also possible with flushing process 302 to flush only one of milking devices 4 and/or to flush further milking devices 4.

It will be apparent that processes 202, 302 can be performed with milking systems 2, 102. It will also be apparent that somewhat alternative embodiments thereof are also possible, wherein use is made of central milk conduits 6, 8 and the corresponding relevant components of milking systems 2, 102.

The present invention is by no means limited to the above described embodiments thereof. The rights sought are defined by the following claims, within the scope of which many modifications can be envisaged.

## Claims

1. Milking system, comprising:
- two or more milking devices;
- a first central milk conduit connected operatively to the two or more milking devices;
- a second central milk conduit connected operatively to the two or more milking devices;
- a central liquid supply conduit;
- at least one milk tank connected to the first and second central milk conduit;
- a milk flow controller configured to switch between the first and the second central milk conduit as an active milk conduit for discharging milk to the at least one milk tank, wherein the other of the first and second central milk conduit is designated as an inactive milk conduit; and
- a flushing controller configured to control the flushing of one of the first and/or second central milk conduit which is designated as inactive milk conduit.

2. Milking system according to claim 1, further comprising a central liquid tank connected operatively to the central liquid supply conduit and configured to flush at least the first and second central milk conduit.

3. Milking system according to claim 1 or 2, further comprising a first milk buffer connected operatively to the first central milk conduit and a second milk buffer connected operatively to the second central milk conduit.

4. Milking system according to claim 1, 2 or 3, wherein the first and second central milk conduits extend between the two or more milking devices and the milk tank.

5. Milking system according to any of the foregoing claims, wherein the flushing controller is configured to enable switching between the flushing circulation mode wherein flushing liquid is being circulated, and the flowthrough flushing mode wherein the flushing liquid flows through the conduits.

6. Milking system according to one or more of the foregoing claims, wherein each of the two or more milking devices is provided with a pump for milk transport to the first and/or second central milk conduit.

7. Milking system according to one or more of the foregoing claims, further comprising a second milk tank connected operatively to the first and/or second central milk conduit.

8. Milking system according to one or more of the foregoing claims, wherein at least a part of the two or more milking devices further comprises a milking robot.

9. Milking system according to one or more of the foregoing claims, further comprising a central discharge conduit.

10. Milking system according to one or more of the foregoing claims, further comprising a central separation conduit.

11. Milking parlour provided with a milking system according to any one of the foregoing claims.

12. Method for milking an animal, comprising of:
- providing a milking system and/or milking parlour according to any one of the foregoing claims;
- switching with the milk flow controller between the first and the second central milk conduit as an active milk conduit for discharge of milk to the at least one milk tank, wherein the other of the first and second central milk conduit is designated as an inactive milk conduit; and
- controlling with the flushing controller the flushing of one of the first and/or second central milk conduit which is designated as inactive milk conduit.

13. Method according to claim 12, further comprising the step of flushing the inactive milk conduit while the active milk conduit is in use for discharging milk from the milking devices to the at least one milk tank, and/or further comprising the step of flushing one of the two or more milking devices while the active milk conduit is in use for discharging milk from the remaining of the two or more milking devices to the at least one milk tank.

14. Method according to claim 12 or 13, further comprising flushing the inactive milk conduit between the milking device and the milk tank, including a milk buffer arranged in the central milk conduit.

15. Method according to any one of claims 12 to 14, further comprising the step of circulating flushing fluid over the fluid supply conduit and the milk conduit.
